# EUROPEAN PATENT APPLICATION

(11) **EP 4 596 943 A1**
(43) Date of publication of application: **06.08.2025**
(21) Application number: 23925701.7
(22) Date of filing: 06.03.2023
(51) Int. Cl.: F16L 27/12, F16L 37/50

(54) **CONNECTION STRUCTURE AND HEAT EXCHANGE DEVICE**

(71) Applicant: Contemporary Amperex Technology (Hong Kong) Limited, Central (HK)
(72) Inventor: ZHANG, Xu, Ningde, Fujian 352100 (CN); SUN, Shuo, Ningde, Fujian 352100 (CN); CHEN, Xubin, Ningde, Fujian 352100 (CN); HUANG, Haihua, Ningde, Fujian 352100 (CN)
(74) Representative: Ziebig Hengelhaupt Intellectual Property Attorneys Patentanwaltskanzlei PartGmbB
(86) International application number: PCT/CN2023/079870
(87) International publication number: WO 2024/182976

(57) **Abstract**

A connection structure (100), provided with a medium channel (100a), at least part of the medium channel (100a) being configured for insertion of an external connector (200) and allowing a variable axial position of the external connector (200) relative to the medium channel (100a). A heat exchange device, including the external connector (200) and the connection structure (100), the external connector (200) being inserted into the medium channel (100a) of the connection structure (100) and having a variable axial position relative to the medium channel (100a). The connection structure (100) allows the variable axial position of the external connector (200) relative to the medium channel (100a), absorbs assembly tolerances caused by manufacturing tolerances and installation tolerances of components, and meanwhile reduces the number of components used and the assembly space.

## Description

### TECHNICAL FIELD

The present application relates to the field of heat exchange, and in particular, to a connection structure and a heat exchange device.

### BACKGROUND

A connection structure is configured to connect adjacent media for connecting media of different segments. When a connection structure is configured to connect adjacent channel structures, a continuous channel capable of conveying media can be formed.

In general, an existing connection structure has a large number of components, and consequently, the design of an assembly structure is complicated, assembly efficiency is low, and large assembly space is required.

### SUMMARY

In view of the above problems, the present application provides a connection structure and a heat exchange device which have advantages of a small number of components, high assembly efficiency, and small assembly space.

In a first aspect, the present application provides a connection structure provided with a medium channel, and at least part of the medium channel is configured for insertion of an external connector and allowing a variable axial position of the external connector relative to the medium channel.

In the technical solutions provided in the embodiments of the present application, at least part of the medium channel is configured for insertion of an external connector and allowing a variable axial position of the external connector relative to the medium channel, and the external connector may be directly assembled to the medium channel, thereby reducing the number of components used and the assembly space. The external connector is directly inserted into the medium channel, and the axial position of the external connector relative to the medium channel is made variable to absorb assembly tolerances caused by manufacturing tolerances and installation tolerances of components, so as to achieve a direct connection between the external connector and the medium channel.

In some embodiments, the medium channel comprises at least an adaptive portion and an adjustable portion that are sequentially arranged in the axial direction thereof, the adaptive portion is configured to be adapted to the external connector and to allow a variable position of the external connector relative to the adaptive portion in the axial direction of the medium channel, and the adjustable portion is provided to receive a part that is of the external connector and that is beyond the adaptive portion. The adaptive portion and the adjustable portion may be arranged based on different assembly tolerance ranges adjusted according to specific needs, so that the connection structure provided in the embodiments of the present application is adapted to various application scenarios.

In some embodiments, the medium channel is provided with two medium ports arranged opposite to each other in the axial direction thereof, and the adaptive portion and the adjustable portion are arranged in the vicinity of at least one of the medium ports. If the adaptive portion and the adjustable portion are arranged in the vicinity of at least one of the medium ports, at least one external connector has a variable axial position relative to the medium channel, and if the adaptive portion and the adjustable portion are arranged at both medium ports, two external connectors have variable axial positions relative to the medium channel, thereby further improving adjustability of assembly tolerances.

In some embodiments, an inner limit portion is arranged in the medium channel, the inner limit portion protrudes from a channel wall of the medium channel toward the inner side of the medium channel, the inner limit portion is located on a movable path of the external connector, and the adaptive portion, the adjustable portion, and the inner limit portion are sequentially arranged in the axial direction of the medium channel. The distance by which the external connector is inserted into the medium channel is defined by the inner limit portion, so that an adjustable limit position is defined.

In some embodiments, the inner limit portion extends in the circumferential direction of the medium channel, and a plane in which the inner limit portion is located is perpendicular to the axis of the medium channel. Because the external connector has an annular cross section, the inner limit portion extends circumferentially to form an annular shape, and is adapted to the cross section of the external connector, and the plane in which the inner limit portion is located is perpendicular to the axis of the medium channel, i.e., perpendicular to the axis of the external connector, then a limit effect achieved is optimal.

In some embodiments, the medium channel comprises at least a first channel segment and a second channel segment that communicate in the axial direction thereof, the radial dimension of the first channel segment is larger than that of the second channel segment, a step is formed at a connection position of the first channel segment and the second channel segment, the first channel segment is provided with the adaptive portion and the adjustable portion, and the adaptive portion and the step define the axial dimension of the adjustable portion. Segments of different radial dimensions of the medium channel are used to form the step, so that the distance by which the external connector is inserted into the medium channel is defined, and the channel wall inside the medium channel is simplified.

In some embodiments, the connection structure comprises an outer limit portion configured with at least part of the adaptive portion, the outer limit portion is away from the adjustable portion in the axial direction of the medium channel, the outer limit portion is provided with a first abutting surface arranged facing away from the adjustable portion, and the first abutting surface is provided to abut against a second abutting surface of the external connector to define the axial distance by which the external connector is inserted into the medium channel. The distance by which the external connector is inserted into the medium channel is defined by the outer limit portion, so that an adjustable limit position is defined.

In some embodiments, the first abutting surface extends in the circumferential direction of the medium channel, and a plane in which the first abutting surface is located is perpendicular to the axis of the medium channel. Because the second abutting surface of the external connector is annular, the outer limit portion extends circumferentially to form an annular shape, and is adapted to the second abutting surface of the external connector, and the plane in which the outer limit portion is located is perpendicular to the axis of the medium channel, i.e., perpendicular to the axis of the external connector, then a limit effect achieved is optimal.

In some embodiments, the connection structure comprises a cylindrical wall portion, an inner cylindrical wall of the cylindrical wall portion forms at least part of the adaptive portion, the cylindrical wall portion is away from the adjustable portion in the axial direction of the medium channel, an end face that is of the cylindrical wall portion and that faces away from the adjustable portion is provided to abut against the second abutting surface of the external connector to define the axial distance by which the external connector is inserted into the medium channel, and the end face is the first abutting surface. The end face of the cylindrical wall portion is used as the first abutting surface, and the first abutting surface and the second abutting surface abut against each other, so that the distance by which the external connector is inserted into the medium channel is limited, and the first abutting surface and the second abutting surface are adapted to each other, thereby improving limit accuracy and effectiveness.

In some embodiments, the radial dimensions of the adjustable portion and the adaptive portion are consistent. Both the adjustable portion and the adaptive portion can be adapted to the external connector to improve insertion stability of the external connector in the medium channel.

In some embodiments, a channel wall of the adaptive portion is provided with an adaptive area to be adapted to an annular seal, and the annular seal is provided to seal the connection structure and the external connector. The purpose of sealing the connection structure and the external connector is achieved by using the annular seal, so as to improve good sealability of a medium inside the medium channel, and prevent leakage of the medium from between the connection structure and the external connector.

In some embodiments, the connection structure comprises a first connection structure and a second connection structure, the first connection structure is provided with a part of the medium channel, the second connection structure is provided with another part of the medium channel, and the first connection structure and the second connection structure are detachably connected in the axial direction of the medium channel. The first connection structure and the second connection structure are so arranged that the first connection structure and the second connection structure can be sequentially removed to prevent leakage of the medium.

In some embodiments, the axis of the medium channel is at an angle to the horizontal line, and the first connection structure is arranged on an upper side of the second connection structure, the channel wall of the another part of the medium channel of the second connection structure is provided with a first adaptive area to be adapted to a first annular seal, and the first annular seal is provided to seal the second connection structure and the external connector. The first connection structure is removed first, and when the first connection structure is removed, the second connection structure and the external connector are sealed by the first annular seal, so that leakage of the medium from between the second connection structure and the external connector can be prevented.

In some embodiments, the first connection structure and the second connection structure are respectively provided with a first accommodating area and a second accommodating area on two opposite sides in the axial direction of the medium channel, the first accommodating area is provided to accommodate a part of a second annular seal, the second accommodating area is provided to accommodate another part of the second annular seal, and the second annular seal is provided to seal the first connection structure and the second connection structure. The first connection structure and the second connection structure are sealed by using the second annular seal, so as to prevent leakage of the medium from between the first connection structure and the second connection structure.

In some embodiments, the axis of the medium channel is at an angle to the horizontal line, and the first connection structure is arranged on an upper side of the second connection structure, the channel wall of the part of the medium channel of the first connection structure is provided with a second adaptive area to be adapted to a third annular seal, and the third annular seal is provided to seal the first connection structure and the external connector. The third annular seal is adapted between the first connection structure and the external connector, so that sealability between the connection structure and the external connector is further improved.

In some embodiments, the first connection structure comprises a first base portion, a first cylindrical wall portion and a second cylindrical wall portion are respectively arranged on two opposite sides of the first base portion, and an inner cylindrical wall of the first cylindrical wall portion communicates with an inner cylindrical wall of the second cylindrical wall portion to form a part of the medium channel. The second connection structure comprises a second base portion, an annular countersink and a cylindrical wall portion are respectively arranged on two opposite sides of the second base portion, the second cylindrical wall portion is inserted into the annular countersink, an end face of the second cylindrical wall portion abuts against a surface of the annular countersink, and the first base portion and the second base portion converge in the axial direction of the medium channel. The first base portion and the second base portion converge in the axial direction of the medium channel, and the end face of the second cylindrical wall portion abuts against the surface of the annular countersink, so that the first connection structure and the second connection structure are conveniently assembled, and assembly efficiency of the connection structure is improved.

In some embodiments, the first connection structure is a flange structure, and the second connection structure is a flange structure. The first connection structure is arranged as a flange structure, and the second connection structure is arranged as a flange structure, so that the connection structure has the advantage of being able to withstand high pressure.

In a second aspect, the present application provides a heat exchange device comprising the connection structure as described above.

In some embodiments, the heat exchange device further comprises a first fastener and a second fastener, the first fastener is connected to the connection structure, one port of the external connector is inserted into at least part of the medium channel and has a variable axial position relative to the medium channel, and another port of the external connector is connected to the second fastener. The external connector is inserted into at least part of the medium channel and has a variable axial position relative to the medium channel, so that assembly tolerances in the axial direction of the medium channel that are caused by manufacturing tolerances and installation tolerances of the first fastener and the second fastener can be absorbed.

In some embodiments, the medium channel is provided with a first medium port and a second medium port that are arranged opposite to each other in the axial direction thereof, the external connector comprises a first connector and a second connector, and the heat exchange device further comprises a second fastener and a third fastener, one port of the first connector is inserted into the first medium port, and another port of the first connector is connected to the third fastener, one port of the second connector is inserted into the second medium port and has a variable axial position relative to the medium channel, and another port of the second connector is connected to the second fastener. The second connector is inserted into the second medium port and has a variable axial position relative to the medium channel, so that assembly tolerances in the axial direction of the medium channel that are caused by manufacturing tolerances and installation tolerances of the third fastener and the second fastener can be absorbed.

In some embodiments, one port of the first connector is inserted into the first medium port and has a variable axial position relative to the medium channel. The first connector is inserted into the first medium port, and the second connector is inserted into the second medium port and has a variable axial position relative to the medium channel, so that assembly tolerances in the axial direction of the medium channel that are caused by manufacturing tolerances and installation tolerances of the third fastener and the second fastener can be absorbed.

The above description is only an overview of the technical solutions of the present application. To make the technical means of the present application clearer and can be implemented according to the content of the specification, and to make the above and other purposes, features and advantages of the present application more obvious and easier to understand, specific implementations of the present application will be illustrated by way of examples.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic assembly diagram of a connection structure according to some embodiments of the present application.
FIG. 2 is a schematic exploded view of a connection structure according to some embodiments of the present application.
FIG. 3 is a schematic sectional view of a connection structure taken in the axial direction according to some embodiments of the present application.
FIG. 4 is a schematic sectional view of a connection structure taken in the axial direction according to some embodiments of the present application.
FIG. 5 is a schematic sectional view of a heat exchange device taken in the axial direction according to some embodiments of the present application.
FIG. 6 is a schematic sectional view of a heat exchange device taken in the axial direction according to some embodiments of the present application.
FIG. 7 is a schematic sectional view of a heat exchange device taken in the axial direction according to some embodiments of the present application.

Reference numerals in specific implementations are as follows:

100. connection structure; 200. external connector; 300. first fastener; 400. second fastener; 500. third fastener; 600. first annular seal; 700. second annular seal; 800. third annular seal; 900. fourth annular seal; 100a. medium channel; 100b. first channel segment; 100c. second channel segment; 100d. inner limit portion; 101. first connection structure; 102. second connection structure; 103. outer limit portion; 103a. first abutting surface; 1011. first base portion; 1012. first cylindrical wall portion; 1013. second cylindrical wall portion; 1021. second base portion; 1022. countersink; 1023. third cylindrical wall portion; 201. first connector; 202. second connector; 200a. second abutting surface; a. adaptive portion; b. adjustable portion; c. first medium port; d. second medium port.

### DESCRIPTION OF EMBODIMENTS

Embodiments of technical solutions of the present application will be described in detail below with reference to the accompanying drawings. The following embodiments are used only for the purpose of describing the technical solutions of the present application more clearly, and thus are by way of example only and are not intended to limit the protection scope of the present application.

Unless otherwise defined, all technical and scientific terms used herein have the same meaning as commonly understood by a person skilled in the art of the present application. The terms used herein are used only for the purpose of describing specific embodiments and are not intended to limit the present application, and the terms "comprise", "have", and any variations thereof in the specification and claims of the present application and the foregoing description of the drawings are intended to cover a non-exclusive inclusion.

In the description of the embodiments of the present application, the technical terms "first", "second", and the like are used only for distinguishing between different objects, and are not to be construed as indicating or implying relative importance or implicitly indicating the number, specific order, or primary and secondary relationship of the technical features indicated. In the description of the embodiments of the present application, "a plurality of" means two or more, unless otherwise specifically defined.

Reference herein to "embodiment" means that a particular feature, structure, or characteristic described with reference to the embodiment may be included in at least one embodiment of the present application. The phrase at all places in the specification neither necessarily refer to the same embodiment, nor is a separate or alternative embodiment mutually exclusive with another embodiment. It is explicitly and implicitly understood by a person skilled in the art that the embodiments described herein may be combined with other embodiments.

In the description of the embodiments of the present application, the term "and/or" only describes an association relationship between associated objects, and indicates that three relationships may exist. For example, A and/or B may indicate the following three cases: Only A exists, both A and B exist, and only B exists. In addition, the symbol "/" used herein generally represents an "or" relationship between associated objects.

In the description of the embodiments of the present application, the term "a plurality of" means two or more (including two), and similarly, the term "multiple groups" means two groups or more (including two groups), and the term "multiple pieces" means two pieces or more (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand specific meanings of the above terms in the embodiments of the present application based on specific conditions.

Power batteries are used in a variety of different fields. The interior of a power battery involves heat dissipation and cooling through flow of a medium. Cooling water is generally selected as a cooling medium, and the battery is circularly cooled through circulation of cooling water.

Generally, in a power battery pack, a water inlet and outlet connector structure is used to connect adjacent water inlets and outlets. The connector structure involved in the related technology includes a flange, an in-pack male connector, and an out-pack male connector, the flange is arranged between the in-pack male connector and the out-pack male connector, an anti-rotation structure is arranged on one side that is of the out-pack male connector and that is close to the flange, a nut is arranged on one side that is of the anti-rotation structure and that is away from the flange, and a spacer is further arranged between the anti-rotation structure and the nut. The connector structure is secured to a battery case by using the nut, and two water inlet and outlet connectors are respectively connected in a quick-plug manner by using the in-pack male connector and the out-pack male connector, so as to connect the inside and the outside of the battery pack to allow a coolant medium to enter the battery pack, so that the temperature of a cell of the battery pack is prevented from being too low or too high, and safety of the battery pack is improved. Alternatively, a flange is used in the power battery pack in combination with a quick connector and a corrugated nylon tube to connect the inside and the outside of the battery pack, so that a coolant medium enters the battery pack. The connector structure for communicating the cooling medium inside and outside the battery pack includes a large number of components. Thus, assembly operation is complicated, assembly efficiency is low, manufacturing cost and assembly cost are high, and space for assembly is large.

Based on the above considerations, to reduce the number of components of the connector structure, simplify assembly operation of the connector structure, improve assembly efficiency, and reduce space occupied by the connector structure, a connection structure 100 having a simple structure is designed. The connection structure 100 can implement convenient assembly, and can absorb assembly tolerances caused by manufacturing tolerances and installation tolerances of the components while the structure is simplified, thereby effectively reducing the difficulty in assembly due to errors.

The connection structure 100 provided in the embodiments of the present application may be used as a connection structure 100 communicating connectors or ends of pipelines through which a medium passes, and may be applied to any connection for communicating conveying pipelines, particularly to a device requiring heat exchange. The medium includes, but is not limited to, a vapor medium, a gaseous medium, a liquid medium, or a molten medium. For example, the connection structure 100 provided in the embodiments of the present application may be applied to a battery pack, and the medium may be a liquid medium, specifically liquid water.

In the following embodiments, for ease of description, a connection structure 100 and a heat exchange device according to an embodiment of the present application are described as examples.

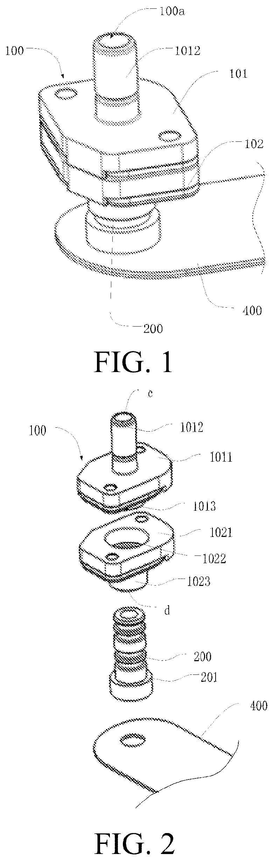

References can be made to FIG. 1 to FIG. 4. A connection structure 100 according to the embodiments of the present application is provided with a medium channel 100a, at least part of the medium channel 100a is configured for insertion of an external connector 200 and allowing a variable axial position of the external connector 200 relative to the medium channel 100a.

The connection structure 100 may be an integrally formed structure, for example, the connection structure may be formed of the same material in the same mold and process, or a part thereof may be formed outside the mold, and then another part is formed in the mold. Alternatively, the connection structure 100 includes two or more split structures, the two or more split structures are assembled as the connection structure 100, and sealing design is adopted between assembly surfaces that are assembled to each other. For example, two split structures are assembled in the axial direction of the medium channel 100a, and a sealing structure is arranged between two assembly surfaces that are of the two split structures and that are abutted against each other in the axial direction of the medium channel 100a, so that other parts of the connection structure 100 except the medium channel 100a are in a sealed state.

A medium channel 100a is arranged on the connection structure 100, optionally, the medium channel 100a may pass through from one side of the connection structure 100 to another side of the connection structure 100, and the one side and the another side may be adjacent or opposite to each other. The medium channel 100a is provided with at least two medium ports, one of which is provided to allow a medium to flow into the interior of the medium channel 100a, and the other of which is provided to allow the medium to flow out of the medium channel 100a from the interior of the medium channel 100a. The two medium ports may be arranged opposite to each other in the axial direction of the medium channel 100a, that is, the two medium ports are respectively arranged on two opposite sides. Alternatively, the axis of one of the at least two medium ports coincides with the axis of the medium channel 100a, and the axis of the other medium port is arranged at an angle, for example, at a vertical angle, to the axis of the medium channel 100a, that is, the two medium ports are respectively arranged on two angled sides that may be adjacent to each other or may be spaced apart by another side.

The medium channel 100a may alternatively be provided with a plurality of pairs of medium ports, and any pair of medium ports may be arranged as described above. At least one of a pair of medium ports may be provided for insertion of the external connector 200 and allowing a variable axial position of the external connector 200 relative to the medium channel 100a, where the axis of the medium port into which the external connector 200 is inserted is the axis of the medium channel 100a in its vicinity, i.e., the axis of the medium port.

At least part of the medium channel 100a is configured for insertion of the external connector 200, or all of the medium channel 100a is configured for insertion of the external connector 200, and the distance by which the external connector 200 is inserted into the medium channel 100a is adjustable according to specific use scenarios of the connection structure 100 and the extended length of the external connector 200 in the axial direction of the medium channel 100a.

In the technical solutions of the embodiments of the present application, at least part of the medium channel 100a is configured for insertion of the external connector 200 and allowing a variable axial position of the external connector 200 relative to the medium channel 100a, and the external connector 200 may be directly assembled to the medium channel 100a, thereby reducing the number of components used and the assembly space. The external connector 200 is directly inserted into the medium channel 100a, and the axial position of the external connector 200 relative to the medium channel 100a is made variable to absorb assembly tolerances caused by manufacturing tolerances and installation tolerances of components, so as to achieve a direct connection between the external connector and the medium channel.

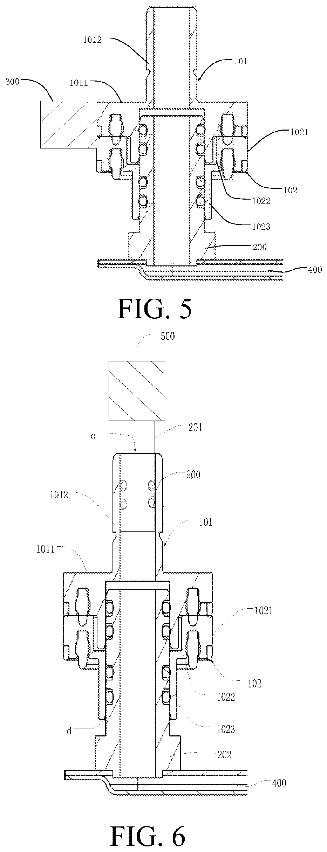

In some application embodiments, the first fastener 300 is connected to the connection structure 100, one port of the external connector 200 is inserted into at least part of the medium channel 100a and has a variable axial position relative to the medium channel 100a, and another port of the external connector 200 is connected to the second fastener 400. The external connector 200 is inserted into at least part of the medium channel 100a and has a variable axial position relative to the medium channel 100a, so that assembly tolerances in the axial direction of the medium channel 100a that are caused by manufacturing tolerances and installation tolerances of the first fastener 300 and the second fastener 400 can be absorbed. For example, as shown in FIG. 5, the external connector 200 is inserted and assembled into a downward-facing medium port of the medium channel 100a. Certainly, in other embodiments, the external connector 200 may be inserted and assembled into an upward-facing medium port of the medium channel 100a. As shown in FIG. 6, in some other application embodiments, the medium channel 100a is provided with a first medium port c and a second medium port d that are arranged opposite to each other in the axial direction thereof, and the external connector 200 includes a first connector 201 and a second connector 202. One port of the first connector 201 is fixedly inserted into the first medium port c, and another port of the first connector 201 is connected to a third fastener 500. One port of the second connector 202 is inserted into the second medium port d and has a variable axial position relative to the medium channel 100a, and another port of the second connector 202 is connected to the second fastener 400. The second connector 202 is inserted into the second medium port d and has a variable axial position relative to the medium channel 100a, so that assembly tolerances in the axial direction of the medium channel 100a that are caused by manufacturing tolerances and installation tolerances of the third fastener 500 and the second fastener 400 can be absorbed.

As shown in FIG. 6, in some other application embodiments, one port of the first connector 201 is inserted into the first medium port c and has a variable axial position relative to the medium channel 100a, and another port of the first connector 201 is connected to the third fastener 500. One port of the second connector 202 is fixedly inserted into the second medium port d, and another port of the second connector 202 is connected to the second fastener 400. The first connector 201 is inserted into the second medium port c and has a variable axial position relative to the medium channel 100a, so that assembly tolerances in the axial direction of the medium channel 100a that are caused by manufacturing tolerances and installation tolerances of the third fastener 500 and the second fastener 400 can be absorbed.

As shown in FIG. 6, in some application embodiments, one port of the first connector 201 is inserted into the first medium port c and has a variable axial position relative to the medium channel 100a, and another port of the first connector 201 is connected to the third fastener 500. One port of the second connector 202 is inserted into the second medium port d and has a variable axial position relative to the medium channel 100a, and another port of the second connector 202 is connected to the second fastener 400. The first connector 201 is inserted into the first medium port c, and the second connector 22 is inserted into the second medium port d and has a variable axial position relative to the medium channel 100a, so that assembly tolerances in the axial direction of the medium channel 100a that are caused by manufacturing tolerances and installation tolerances of the third fastener 500 and the second fastener 400 can be absorbed.

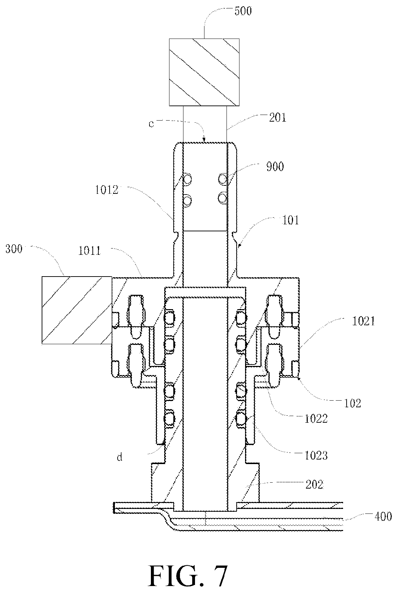

As shown in FIG. 7, in some other application embodiments, the first fastener 300 is connected to the connection structure 100, one port of the first connector 201 is inserted into the first medium port c and has a variable axial position relative to the medium channel 100a, and another port of the first connector 201 is connected to the third fastener 500. One port of the second connector 202 is inserted into the second medium port d and has a variable axial position relative to the medium channel 100a, and another port of the second connector 202 is connected to the second fastener 400. The first connector 201 is inserted into the first medium port c, and the second connector 22 is inserted into the second medium port d and has a variable axial position relative to the medium channel 100a, so that assembly tolerances in the axial direction of the medium channel 100a that are caused by manufacturing tolerances and installation tolerances of the third fastener 500, the second fastener 400, and the first fastener 300 can be absorbed.

In some embodiments, the medium channel 100a includes at least an adaptive portion a and an adjustable portion b that are sequentially arranged in the axial direction thereof, the adaptive portion a is configured to be adapted to the external connector 200 and to allow a variable position of the external connector 200 relative to the adaptive portion a in the axial direction of the medium channel 100a, and the adjustable portion b is provided to receive a part that is of the external connector 200 and that is beyond the adaptive portion a.

The adaptive portion a has a length extending in the axial direction of the medium channel 100a and has a radial dimension extending in the radial direction of the medium channel 100a, and the radial dimension of the adaptive portion a is adapted to the outer diameter of the external connector 200 for insertion and assembly of the external connector 200. The adjustable portion b has a length extending in the axial direction of the medium channel 100a and has a radial dimension extending in the radial direction of the medium channel 100a, the radial dimension of the adjustable portion b does not need to be adapted to the outer diameter of the external connector 200, and optionally, the radial dimension of the adjustable portion b may be greater than or equal to the outer diameter of the external connector 200 to provide space for a change in the position of the external connector 200 when the axial position of the external connector 200 relative to the medium channel 100a changes. The cross-sectional shapes of both the adaptive portion a and the adjustable portion b may be circular, and the radial dimensions of the two portions are consistent. The cross-sectional shapes of the adaptive portion a and the adjustable portion b may be other shapes such as polygons, ellipses, trapezoids, or irregular shapes.

In terms of the axial dimension of the adaptive portion a and the axial dimension of the adjustable portion b, the adaptive portion a and the adjustable portion b may be arranged based on different assembly tolerance ranges adjusted according to specific needs, so that the connection structure 100 provided in the embodiments of the present application is adapted to various application scenarios.

In some embodiments, the medium channel 100a is provided with two medium ports arranged opposite to each other in the axial direction thereof, and the adaptive portion a and the adjustable portion b are arranged in the vicinity of at least one of the medium ports.

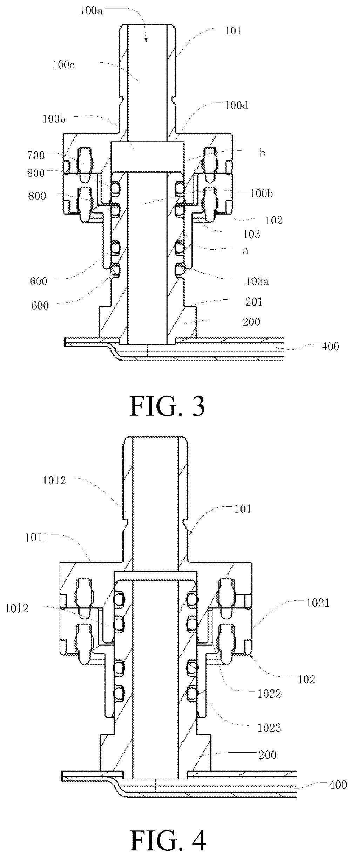

In one implementation, as shown in FIG. 3 and FIG. 4, the medium channel 100a is provided with two medium ports arranged opposite to each other in the axial direction thereof, one medium port is movably assembled with a second connector, and the medium channel 100a in the vicinity of the other medium port allows a variable position of the second connector in the axial direction of the medium channel 100a, so that assembly tolerances of components in the axial direction can be adjusted through one of the two medium ports.

In another implementation, the medium channel 100a is provided with two medium ports arranged opposite to each other in the axial direction thereof, one of the medium ports may be fixedly assembled with a first connector whose axial position relative to the medium channel 100a is not variable. The other medium port is movably assembled with a second connector, and the medium channel 100a in the vicinity of the other medium port allows a variable position of the second connector in the axial direction of the medium channel 100a, so that assembly tolerances of components in the axial direction can be adjusted through one of the two medium ports.

In another implementation, the medium channel 100a is provided with two medium ports arranged opposite to each in the axial direction thereof, one of the medium ports is movably assembled with a first connector, and the medium channel 100a in the vicinity of the one medium port allows a variable position of the first connector in the axial direction of the medium channel 100a. The other medium port is movably assembled with a second connector, and the medium channel 100a in the vicinity of the other medium port allows a variable position of the second connector in the axial direction of the medium channel 100a, so that assembly tolerances of components in the axial direction can be adjusted through the two medium ports.

In yet another implementation, the adaptive portion a and the adjustable portion b are arranged in the vicinity of one medium port, and the adaptive portion a and the adjustable portion b are also arranged in the vicinity of the other medium port. The axial dimensions of the adaptive portions a in the vicinity of the two medium ports may be the same or different, and the radial dimensions in the vicinity of the two medium ports may be the same or different, depending on the outer diameters of the first connector and the second connector being inserted and assembled. The adjustable portions b in the vicinity of the two medium ports may be arranged in an overlapping manner, or the adjustable portions b in the vicinity of the two medium ports may be separately arranged. Optionally, in order to prevent the first connector and the second connector from coming into contact with each other inside the medium channel 100a, the adjustable portions b in the vicinity of the two medium ports are separately arranged, and an isolation structure is optionally arranged between the two adjustable portions b. The isolation structure does not affect normal conduction of the medium channel 100a, and the two adjustable portions b are isolated by the isolation structure, so that adjustment of the first connector and the second connector inside the medium channel 100a does not interfere with each other.

If the adaptive portion a and the adjustable portion b are arranged in the vicinity of at least one medium port of the medium channel 100a, at least one external connector 200 has a variable axial position relative to the medium channel 100a, and if the adaptive portion a and the adjustable portion b are arranged at both medium ports, two external connectors 200 have variable axial positions relative to the medium channel 100a, thereby further improving adjustability of assembly tolerances.

In some embodiments, an inner limit portion 100d is arranged in the medium channel 100a, the inner limit portion 100d protrudes from a channel wall of the medium channel 100a toward the inner side of the medium channel 100a, the inner limit portion 100d is located on a movable path of the external connector 200, and the adaptive portion a, the adjustable portion b, and the inner limit portion 100d are sequentially arranged in the axial direction of the medium channel 100a.

The channel wall of the medium channel 100a constitutes the inner wall of the medium channel 100a, the channel wall has an axial dimension and a radial dimension, and the channel wall circumferentially forms a closed annular shape, with two ends in the axial direction being provided with the first medium port and the second medium port. A wall surface of the channel wall is provided with an inner protrusion in the direction toward the central axis of the medium channel 100a, the protrusion direction may be understood as a direction extending radially inward, and the inner protrusion may be of any structure, such as a convex column, a boss, a bump, or a tab, and the structure may be a solid structure, such as a semi-annular protrusion structure extending in the circumferential direction of the channel wall, or may be a hollow structure, such as an arched arc boss. The number of the inner protrusion may be one or more, for example, two inner protrusions are provided, and the two inner protrusions are arranged opposite to each other in the radial direction of the channel wall, for example, three or more inner protrusions may be provided, and the three or more protrusions are sequentially spaced apart from each other in the circumferential direction of the channel wall. The inner protrusion may alternatively be a closed annular structure circumferentially encircling the channel wall.

The inner limit portion 100d is arranged on the inner wall of the channel wall, the inner limit portion 100d is arranged on one side that is of the adjustable portion b and that faces away from the adaptive portion a, and the distance by which the external connector 200 is inserted into the medium channel 100a is defined by the inner limit portion 100d, so that an adjustable limit position is defined.

In some embodiments, the inner limit portion 100d extends in the circumferential direction of the medium channel 100a, and a plane in which the inner limit portion 100d is located is perpendicular to the axis of the medium channel 100a.

The inner limit portion 100d has a circumferential dimension extending in the circumferential direction of the medium channel 100a. If the circumferential dimension is larger, the contact area between the inner limit portion 100d and the external connector 200 in the circumferential direction is larger, and a limit effect of the inner limit portion 100d on the external connector 200 is more reliable. The plane in which the inner limit portion 100d is located is arranged perpendicular to the axis of the medium channel 100a, and optionally, a surface that is of the external connector 200 and that is provided for contact with the inner limit portion 100d is also perpendicular to the axis of the medium channel 100a, then the two surfaces that are both perpendicular to the axis of the medium channel 100a are in contact along the axis with the best reliability. Certainly, the plane in which the inner limit portion 100d is located may alternatively be at another angle, for example at an obtuse angle or an acute angle, to the axis of the medium channel 100a, and angles of the plane in which the inner limit portion 100d is located and the surface that is of the external connector 200 and that is in contact with the inner limit portion 100d may be adapted to each other, for example, the two surfaces are adapted to each other through an inclined plane that is arranged at an acute angle to the axis of the medium channel 100a. Optionally, the inner limit portion 100d extends circumferentially around the medium channel 100a to form an annular shape.

Because the external connector 200 has an annular cross section, the inner limit portion 100d extends circumferentially to form an annular shape, and is adapted to the cross section of the external connector 200, and the plane in which the inner limit portion 100d is located is perpendicular to the axis of the medium channel 100a, i.e., perpendicular to the axis of the external connector 200, then a limit effect achieved is optimal.

As shown in FIG. 3 and FIG. 4, in some embodiments, the medium channel 100a includes at least a first channel segment 100b and a second channel segment 100c that communicate in the axial direction thereof, the radial dimension of the first channel segment 100b is larger than that of the second channel segment 100c, a step is formed at a connection position of the first channel segment 100b and the second channel segment 100c, the first channel segment 100b is provided with the adaptive portion a and the adjustable portion b, and the adaptive portion a and the step define the axial dimension of the adjustable portion b.

The radial dimension of the first channel segment 100b is larger than that of the second channel segment 100c, and a drop design of the channel wall occurs at the connection of the first channel segment 100b and the second channel segment 100c, the drop design forms a step toward the first channel segment 100b, a surface of the step is provided for contact with one end of the external connector 200, so as to define the distance by which the external connector 200 is inserted and assembled into the medium channel 100a.

Segments of different radial dimensions of the medium channel 100a are used to form the step, so that the distance by which the external connector 200 is inserted into the medium channel 100a is defined, and the channel wall inside the medium channel 100a can be simplified without having to design another structure on the channel wall of the medium channel 100a.

In some embodiments, the connection structure 100 includes an outer limit portion 103 configured with at least part of the adaptive portion a, the outer limit portion 103 is away from the adjustable portion b in the axial direction of the medium channel 100a, the outer limit portion 103 is provided with a first abutting surface 103a arranged facing away from the adjustable portion b, and the first abutting surface 103a is provided to abut against a second abutting surface 200a of the external connector 200 to define the axial distance by which the external connector 200 is inserted into the medium channel 100a.

As a part of the connection structure 100 and also as a structure for constructing the medium channel 100a, the outer limit portion 103 is configured with at least part of the adaptive portion a. The larger the volume of the connection structure 100 occupied by the outer limit portion 103, the more adaptive portion a can be configured, and the smaller the volume of the connection structure 100 occupied by the outer limit portion 103, the fewer adaptive portion a can be configured. Certainly, the outer limit portion 103 may also be configured with all of the adaptive portion a.

The outer limit portion 103 is provided with a first abutting surface 103a arranged facing away from the adjustable portion b, and the first abutting surface 103a is provided to abut against a second abutting surface 200a of the external connector 200. The first abutting surface 103a is arranged toward the outside of the medium channel 100a, and when the external connector 200 is inserted and assembled toward the inside of the medium channel 100a, the second abutting surface 200a thereon is arranged toward the inside of the medium channel 100a, that is, the first abutting surface 103a and the second abutting surface 200a are arranged opposite to each other in the axial direction of the medium channel 100a. When the first abutting surface 103a and the second abutting surface 200a are abutted against each other, the distance by which the external connector 200 can be inserted into the medium channel 100a is determined.

The outer limit portion 103 is a part of the connection structure 100 itself. If at least part of the adaptive portion a is configured in the outer limit portion 103, limit can be achieved by the connection structure 100 itself. The distance by which the external connector 200 is inserted into the medium channel 100a is defined by the outer limit portion 103, so that an adjustable limit position is defined.

In some embodiments, the first abutting surface 103a extends in the circumferential direction of the medium channel 100a, and a plane in which the first abutting surface 103a is located is perpendicular to the axis of the medium channel 100a.

The first abutting surface 103a is arranged perpendicular to the axis of the medium channel 100a, and optionally, the second abutting surface 200a that is of the external connector 200 and that is provided for contact with the first abutting surface 103a is also perpendicular to the axis of the medium channel 100a, then the two abutting surfaces that are both perpendicular to the axis of the medium channel 100a are in contact along the axis with the best reliability. Certainly, the plane in which the first abutting surface 103a is located may also be at another angle, for example at an obtuse angle or an acute angle, to the axis of the medium channel 100a, and angles of the first abutting surface 103a and the second abutting surface 200a may be adapted to each other, for example, the two abutting surfaces are adapted to each other through an inclined plane that is arranged at an acute angle to the axis of the medium channel 100a. Optionally, the first abutting surface 103a and the second abutting surface 200a extends circumferentially around the medium channel 100a to form an annular shape.

Because the second abutting surface 200a of the external connector 200 is annular, the outer limit portion 103 extends circumferentially to form an annular shape, and is adapted to the second abutting surface 200a of the external connector 200, and the plane in which the outer limit portion 103 is located is perpendicular to the axis of the medium channel 100a, i.e., perpendicular to the axis of the external connector 200, then a limit effect achieved is optimal.

In some embodiments, the connection structure 100 includes a cylindrical wall portion that is specifically a third cylindrical wall portion 1023, an inner cylindrical wall of the third cylindrical wall portion 1023 forms at least part of the adaptive portion a, the third cylindrical wall portion 1023 is away from the adjustable portion b in the axial direction of the medium channel 100a, an end face that is of the third cylindrical wall portion 1023 and that faces away from the adjustable portion b is provided to abut against the second abutting surface 200a of the external connector 200 to define the axial distance by which the external connector 200 is inserted into the medium channel 100a, and the end face is the first abutting surface 103a.

The third cylindrical wall portion 1023 has an axial dimension, the third cylindrical wall portion 1023 is provided with an outer wall surface and an inner wall surface that are spaced apart from each other in the radial direction thereof, the inner wall surface serves as at least part of the adaptive portion a, that is, the third cylindrical wall portion 1023 has a thickness in the radial direction thereof, and the third cylindrical wall portion 1023 is provided with an annular end face, i.e., the first abutting surface 103a, at an axial end thereof.

With the structure of the third cylindrical wall portion 1023 itself, the end face thereof is used as the first abutting surface 103a, and the radially extended dimension of the first abutting surface 103a is defined by the thickness of the third cylindrical wall portion 1023 itself to limit the specific shape and the specific size of the first abutting surface 103a, so that shapes and dimensions of the first abutting surface 103a and the second abutting surface 200a tend to be consistent. The first abutting surface 103a and the second abutting surface 200a are abutted against each other, with a larger abutting area and higher abutting accuracy, so that the distance by which the external connector 200 is inserted into the medium channel 100a is limited more reliably, and the first abutting surface 103a and the second abutting surface 200a are adapted to each other to improve limit accuracy and effectiveness.

In some embodiments, the inner limit portion 100d and the outer limit portion 103 may be alternatively selected. For example, the inner limit portion 100d is arranged to limit the distance by which the external connector 200 is inserted into the medium channel 100a, and the outer limit portion 103 is not arranged. For example, the outer limit portion 103 is arranged to limit the distance by which the external connector 200 is inserted into the medium channel 100a, and the inner limit portion 100d is not arranged. In some embodiments, both the inner limit portion 100d and the outer limit portion 103 may be optionally arranged.

In some embodiments, the medium channel 100a is provided with two medium ports arranged opposite to each in the axial direction thereof, one of the medium ports is movably assembled with a first connector, and the medium channel 100a in the vicinity of the one medium port allows a variable position of the first connector in the axial direction of the medium channel 100a. The other medium port is movably assembled with a second connector, and the medium channel 100a in the vicinity of the other medium port allows a variable position of the second connector in the axial direction of the medium channel 100a, so that assembly tolerances of components in the axial direction can be adjusted through the two medium ports. When the connection structure 100 is movably assembled with the first connector and the second connector, the first connector may be limited by one of the inner limit portion 100d and the outer limit portion 103, and the second connector may be limited by the other one of the inner limit portion 100d and the outer limit portion 103.

In some embodiments, the radial dimensions of the adjustable portion b and the adaptive portion a are consistent.

The adaptive portion a has a length extending in the axial direction of the medium channel 100a and has a radial dimension extending in the radial direction of the medium channel 100a, and the radial dimension of the adaptive portion a is adapted to the outer diameter of the external connector 200 for insertion and assembly of the external connector 200. The adjustable portion b has a length extending in the axial direction of the medium channel 100a and has a radial dimension extending in the radial direction of the medium channel 100a, the radial dimension of the adjustable portion b does not need to be adapted to the outer diameter of the external connector 200, and optionally, the radial dimension of the adjustable portion b may be greater than or equal to the outer diameter of the external connector 200 to provide space for a change in the position of the external connector 200 when the axial position of the external connector 200 relative to the medium channel 100a changes. Optionally, the radial dimensions of the adjustable portion b and the adaptive portion a are consistent, so that the radial dimension of the adjustable portion b is also adapted to the outer diameter of the external connector 200, thereby further improving insertion stability between the medium channel 100a and the external connector 200.

In some embodiments, a channel wall of the adaptive portion a is provided with an adaptive area to be adapted to an annular seal, and the annular seal is provided to seal the connection structure 100 and the external connector 200.

The channel wall is provided with a circumferentially closed annular surface on which an adaptive area is arranged. The adaptive area may be a wall surface of the channel wall itself, and the adaptive area circumferentially encircles the channel wall and has an axial dimension that is much smaller than that of the channel wall itself in the axial direction of the channel wall. Alternatively, an annular receiving groove may be formed on the channel wall, and a groove area of the receiving groove is an adaptive area. The annular seal is of an annular structure and has some deformation performance, for example, the annular seal is an annular rubber seal ring, and the annular seal is arranged in the adaptive area to seal the inner wall surface of the medium channel 100a in the circumferential direction and the outer wall surface of the external connector 200 in the circumferential direction. The purpose of sealing the connection structure 100 and the external connector 200 is achieved by using the annular seal, so as to improve good sealability of a medium inside the medium channel 100a, and prevent leakage of the medium from between the connection structure 100 and the external connector 200.

In some embodiments, the connection structure 100 includes a first connection structure 101 and a second connection structure 102. The first connection structure 101 is provided with a part of the medium channel 100a, the second connection structure 102 is provided with another part of the medium channel 100a, and the first connection structure 101 and the second connection structure 102 are detachably connected in the axial direction of the medium channel 100a.

The first connection structure 101 may be an integrally formed structure. Alternatively, the first connection structure 101 includes two or more split structures, the two or more split structures are assembled as the first connection structure 101, and sealing design is adopted between assembly surfaces that are assembled to each other. A sealing structure is arranged between two assembly surfaces that are of the two split structures and that are abutted against each other, so that other parts of the first connection structure 101 except the medium channel 100a are in a sealed state.

The second connection structure 102 may be an integrally formed structure. Alternatively, the second connection structure 102 includes two or more split structures, the two or more split structures are assembled as the second connection structure 102, and sealing design is adopted between assembly surfaces that are assembled to each other. A sealing structure is arranged between two assembly surfaces that are of the two split structures and that are abutted against each other, so that other parts of the second connection structure 102 except the medium channel 100a are in a sealed state.

A part of the medium channel 100a is arranged on the first connection structure 101, optionally, the part of the medium channel 100a may pass through from one side of the first connection structure 101 to another side of the first connection structure 101, and the one side and the another side may be adjacent or opposite to each other. The part of the medium channel 100a is provided with at least two medium ports, one of which is provided to allow a medium to flow into the interior of the part of the medium channel 100a, and the other of which is provided to allow the medium to flow out of the part of the medium channel 100a from the interior of the part of the medium channel 100a. The two medium ports may be arranged opposite to each other in the axial direction of the part of the medium channel 100a, that is, the two medium ports are respectively arranged on two opposite sides. Alternatively, the axis of one of the at least two medium ports coincides with the axis of the part of the medium channel 100a, and the axis of the other medium port is arranged at an angle, for example, at a vertical angle, to the axis of the part of the medium channel 100a, that is, the two medium ports are respectively arranged on two angled sides that may be adjacent to each other or may be spaced apart by another side.

Another part of the medium channel 100a is arranged on the second connection structure 102, optionally, the another part of the medium channel 100a may pass through from one side of the second connection structure 102 to another side of the second connection structure 102, and the one side and the another side may be adjacent or opposite to each other. The another part of the medium channel 100a is provided with at least two medium ports, one of which is provided to allow a medium to flow into the interior of the another part of the medium channel 100a, and the other of which is provided to allow the medium to flow out of the another part of the medium channel 100a from the interior of the another part of the medium channel 100a. The two medium ports may be arranged opposite to each other in the axial direction of the another part of the medium channel 100a, that is, the two medium ports are respectively arranged on two opposite sides. Alternatively, the axis of one of the at least two medium ports coincides with the axis of the another part of the medium channel 100a, and the axis of the other medium port is arranged at an angle, for example, at a vertical angle, to the axis of the another part of the medium channel 100a, that is, the two medium ports are respectively arranged on two angled sides that may be adjacent to each other or may be spaced apart by another side.

That is, on the first connection structure 101 and the second connection structure 102, a part of the medium channel 100a communicates with another part of the medium channel 100a, but extension paths of the part of the medium channel 100a and the another part of the medium channel 100a may be different. For example, a part of the medium channel 100a on the first connection structure 101 has two parts that are connected at an angle, another part of the medium channel 100a on the second connection structure 102 is linear, and the part of the medium channel 100a on the first connection structure 101 communicates with the another part of the medium channel 100a on the second connection structure 102 to form the entire medium channel 100a of the connection structure 100. For example, a part of the medium channel 100a on the first connection structure 101 has two parts that are connected at an angle, another part of the medium channel 100a on the second connection structure 102 has two parts that are connected at an angle, and the part of the medium channel 100a on the first connection structure 101 communicates with the another part of the medium channel 100a on the second connection structure 102 to form the entire medium channel 100a of the connection structure 100.

In this embodiment, the first connection structure 101 and the second connection structure 102 are so arranged that the first connection structure 101 and the second connection structure 102 can be sequentially removed to prevent leakage of the medium. Specifically, the first connection structure 101 and the second connection structure 102 are detachably connected in the axial direction of the medium channel 100a. For an external structure close to the second connection structure 102, the first connection structure 101 is removed first. When the first connection structure 101 is removed, the liquid level of the medium is maintained in an axial area of the second connection structure 102 in which the medium channel 100a is located, then the external connector 200 is inserted and assembled into the second connection structure 102, so that leakage of the medium can be prevented. The first connection structure 101 and the second connection structure 102 are detachably connected in the axial direction of the medium channel 100a. For an external structure close to the first connection structure 101, the second connection structure 102 is removed first. When the second connection structure 102 is removed, the liquid level of the medium is maintained in an axial area of the first connection structure 101 in which the medium channel 100a is located, then the external connector 200 is inserted and assembled into the first connection structure 101, so that leakage of the medium can be prevented.

In some embodiments, the axis of the medium channel 100a is at an angle to the horizontal line, and the first connection structure 101 is arranged on an upper side of the second connection structure 102, the channel wall of the another part of the medium channel 100a of the second connection structure 102 is provided with a first adaptive area to be adapted to a first annular seal 600, and the first annular seal 600 is provided to seal the second connection structure 102 and the external connector 200.

The channel wall of the another part of the medium channel 100a of the second connection structure 102 is provided with a circumferentially closed annular surface on which a first adaptive area is arranged. The first adaptive area may be a wall surface of the channel wall itself, and the first adaptive area circumferentially encircles the channel wall and has an axial dimension that is much smaller than that of the channel wall itself in the axial direction of the channel wall. Alternatively, an annular first receiving groove may be formed on the channel wall, and a groove area of the first receiving groove is an adaptive area. The first annular seal 600 is of an annular structure and has some deformation performance, for example, the first annular seal 600 is an annular rubber seal ring, and the annular seal is arranged in the first adaptive area to seal the inner wall surface of the another part of the medium channel 100a in the circumferential direction and the outer wall surface of the external connector 200 in the circumferential direction.

The first connection structure 101 and the second connection structure 102 are detachably connected in the axial direction of the medium channel 100a, and the axis of the medium channel 100a is at an angle to the horizontal line, and optionally, the axis of the medium channel 100a is arranged perpendicular to the horizontal line. The first connection structure 101 is removed first. When the first connection structure 101 is removed, the liquid level of the medium is maintained in an axial area of the second connection structure 102 in which the medium channel 100a is located, and the second connection structure 102 and the external connector 200 are sealed by the first annular seal 600, then the external connector 200 is inserted and assembled into the second connection structure 102, so that leakage of the medium can be prevented.

In some embodiments, the first connection structure 101 and the second connection structure 102 are respectively provided with a first accommodating area and a second accommodating area on two opposite sides in the axial direction of the medium channel 100a, the first accommodating area is provided to accommodate a part of a second annular seal 700, the second accommodating area is provided to accommodate another part of the second annular seal 700, and the second annular seal 700 is provided to seal the first connection structure 101 and the second connection structure 102.

The first connection structure 101 and the second connection structure 102 are detachably connected in the axial direction of the medium channel 100a, the first connection structure 101 is provided with an assembly surface facing the second connection structure 102, and the second connection structure 102 is provided with an assembly surface facing the first connection structure 101. The two assembly surfaces can be understood as circumferentially closed annular surfaces on which a first accommodating area and a second accommodating area are respectively arranged, and both the first accommodating area and the second accommodating area are annular grooves centered on the central axis of the medium channel 100a. The second annular seal 700 is of an annular structure and has some deformation performance, for example, the second annular seal 700 is an annular rubber seal ring, the first accommodating area accommodates a part of the second annular seal 700, the second accommodating area accommodates another part of the second annular seal 700, and the second annular seal 700 seals the first connection structure 101 and the second connection structure 102. The first connection structure 101 and the second connection structure 102 are sealed by using the second annular seal 700, so as to prevent leakage of the medium from between the first connection structure 101 and the second connection structure 102.

In some embodiments, the axis of the medium channel 100a is at an angle to the horizontal line, and the first connection structure 101 is arranged on an upper side of the second connection structure 102, the channel wall of the part of the medium channel 100a of the first connection structure 101 is provided with a second adaptive area to be adapted to a third annular seal 800, and the third annular seal 800 is provided to seal the first connection structure 101 and the external connector 200.

The channel wall of the part of the medium channel 100a of the first connection structure 101 is provided with a circumferentially closed annular surface on which a second adaptive area is arranged. The second adaptive area may be a wall surface of the channel wall itself, and the second adaptive area circumferentially encircles the channel wall and has an axial dimension that is much smaller than that of the channel wall itself in the axial direction of the channel wall. Alternatively, an annular second receiving groove may be formed on the channel wall, and a groove area of the second receiving groove is an adaptive area. The third annular seal 800 is of an annular structure and has some deformation performance, for example, the third annular seal 800 is an annular rubber seal ring, and the third annular seal 800 is arranged in the second adaptive area to seal the inner wall surface of the part of the medium channel 100a in the circumferential direction and the outer wall surface of the external connector 200 in the circumferential direction. The third annular seal 800 is adapted between the first connection structure 101 and the external connector 200, so that sealability between the connection structure 100 and the external connector 200 is further improved.

In the above embodiments, the first annular seal 600 and the second annular seal 700 play a main role in sealing, while the third annular seal 800 is provided to play an auxiliary role in sealing. The number of the first annular seal 600, the second annular seal 700, and the third annular seal 800 may be one or more. When the external connector 200 is movable relative to the channel wall of the medium channel 100a, the external connector 200 may drive the second annular seal 700 and the third annular seal 800 to be simultaneously movable relative to the channel wall of the medium channel 100a. As shown in FIG. 3 and FIG. 4, different depths by which the external connector 200 is inserted into the medium channel 100a are respectively illustrated. When the penetration depth of the external connector 200 is minimum, optionally, a position at which the first annular seal 600 is not taken out of the channel wall of the medium channel 100a is regarded as a limit position.

As shown in FIG. 6 and FIG. 7, when the first medium port c is assembled with the first connector 201, a fourth annular seal 900 is arranged between the first connector 201 and the inner wall of the first cylindrical wall portion 1012, and the fourth annular seal 900 is provided to seal the first connector 201 and the inner wall of the first cylindrical wall portion 1012.

In some embodiments, the first connection structure 101 includes a first base portion 1011, a first cylindrical wall portion 1012 and a second cylindrical wall portion 1013 are respectively arranged on two opposite sides of the first base portion 1011, and an inner cylindrical wall of the first cylindrical wall portion 1012 communicates with an inner cylindrical wall of the second cylindrical wall portion 1013 to form a part of the medium channel 100a. The second connection structure 102 includes a second base portion 1021, an annular countersink 1022 and a third cylindrical wall portion 1023 are respectively arranged on two opposite sides of the second base portion 1021, the second cylindrical wall portion 1013 is inserted into the annular countersink 1022, an end face of the second cylindrical wall portion 1013 abuts against a surface of the annular countersink 1022, and the first base portion 1011 and the second base portion 1021 converge in the axial direction of the medium channel 100a.

The first connection structure 101 and the second connection structure 102 are respectively provided with a first accommodating area and a second accommodating area that are respectively arranged in the first base portion 1011 and the second base portion 1021, and a second annular seal 700 is sandwiched between the first base portion 1011 and the second base portion 1021 to achieve sealing between the first base portion 1011 and the second base portion 1021. The first base portion 1011 and the second base portion 1021 converge in the axial direction of the medium channel 100a, and the end face of the second cylindrical wall portion 1013 abuts against the surface of the annular countersink 1022, so that the first connection structure 101 and the second connection structure 102 are conveniently assembled, and assembly efficiency of the connection structure 100 is improved.

As shown in FIG. 3 and FIG. 4, the axis of the medium channel 100a extends in a vertical direction, the first connection structure 101 is arranged on the upper side, the second connection structure 102 is arranged on the lower side, and positions of the first connection structure 101 and the second connection structure 102 are interchangeable. When the first connection structure 101 is arranged below the second connection structure 102, the radial dimension of the part of the medium channel 100a of the first connection structure 101 is larger than that of the another part of the medium channel 100a of the second connection structure 102, so that the external connector 200 inserted into the first connection structure 101 is limited by the step due to the difference in the radial dimensions of the two parts of the medium channel 100a.

In some embodiments, the first connection structure 101 is a flange structure, and the second connection structure 102 is a flange structure. The first connection structure 101 is arranged as a flange structure, and the second connection structure 102 is arranged as a flange structure, so that the connection structure 100 has the advantage of being able to withstand high pressure.

Provided in another aspect of the embodiments of the present application is a heat exchange device including the connection structure 100 as described above.

In some embodiments, the heat exchange device further includes a first fastener and a second fastener 400, the first fastener is connected to the connection structure 100, one port of the external connector 200 is inserted into at least part of the medium channel 100a and has a variable axial position relative to the medium channel 100a, and another port of the external connector 200 is connected to the second fastener 400.

The first fastener may be connected to the first connection structure 101 or the second connection structure 102, or the first fastener may be connected to both the first connection structure 101 and the second connection structure 102. The first fastener and the second fastener 400 are assembled in the axial direction of the medium channel 100a, and certainly, specific positions of the first fastener and the second fastener 400 do not need to be opposite or to have an overlapping part in the axial direction of the medium channel 100a. Provided that the first fastener is fixedly connected to the connection structure 100, the second fastener 400 is fixedly connected to another port of the external connector 200, and the first fastener and the second fastener 400 are fastened opposite to each other in the axial direction of the medium channel 100a, assembly tolerances between the first fastener and the second fastener 200 can be absorbed through variability of the position of the external connector 400 relative to the medium channel 100a in the axial direction thereof, which facilitates assembly convenience and assembly accuracy of the external connector 200 and the connection structure 100.

For example, the heat exchange device is a battery pack structure, the first fastener may be a battery box body, and the second fastener 400 may be a water-cooled plate. The external connector 200 is inserted into at least part of the medium channel 100a and has a variable axial position relative to the medium channel 100a, so that assembly tolerances in the axial direction of the medium channel 100a that are caused by manufacturing tolerances and installation tolerances of the battery box body and the water-cooled plate can be absorbed.

In some embodiments, the first fastener 300 is connected to the connection structure 100, one port of the external connector 200 is inserted into at least part of the medium channel 100a and has a variable axial position relative to the medium channel 100a, and another port of the external connector 200 is connected to the second fastener 400. The external connector 200 is inserted into at least part of the medium channel 100a and has a variable axial position relative to the medium channel 100a, so that assembly tolerances in the axial direction of the medium channel 100a that are caused by manufacturing tolerances and installation tolerances of the first fastener 300 and the second fastener 400 can be absorbed. For example, as shown in FIG. 5, the external connector 200 is inserted and assembled into a downward-facing medium port of the medium channel 100a. Certainly, in other embodiments, the external connector 200 may be inserted and assembled into an upward-facing medium port of the medium channel 100a.

As shown in FIG. 6, in some other application embodiments, the medium channel 100a is provided with a first medium port c and a second medium port d that are arranged opposite to each other in the axial direction thereof, and the external connector 200 includes a first connector 201 and a second connector 202. One port of the first connector 201 is fixedly inserted into the first medium port c, and another port of the first connector 201 is connected to a third fastener 500. One port of the second connector 202 is inserted into the second medium port d and has a variable axial position relative to the medium channel 100a, and another port of the second connector 202 is connected to the second fastener 400. The second connector 202 is inserted into the second medium port d and has a variable axial position relative to the medium channel 100a, so that assembly tolerances in the axial direction of the medium channel 100a that are caused by manufacturing tolerances and installation tolerances of the third fastener 500 and the second fastener 400 can be absorbed.

As shown in FIG. 6, in some other embodiments, one port of the first connector 201 is inserted into the first medium port c and has a variable axial position relative to the medium channel 100a, and another port of the first connector 201 is connected to the third fastener 500. One port of the second connector 202 is fixedly inserted into the second medium port d, and another port of the second connector 202 is connected to the second fastener 400. The first connector 201 is inserted into the second medium port c and has a variable axial position relative to the medium channel 100a, so that assembly tolerances in the axial direction of the medium channel 100a that are caused by manufacturing tolerances and installation tolerances of the third fastener 500 and the second fastener 400 can be absorbed.

As shown in FIG. 6, in some embodiments, one port of the first connector 201 is inserted into the first medium port c and has a variable axial position relative to the medium channel 100a, and another port of the first connector 201 is connected to the third fastener 500. One port of the second connector 202 is inserted into the second medium port d and has a variable axial position relative to the medium channel 100a, and another port of the second connector 202 is connected to the second fastener 400. The first connector 201 is inserted into the first medium port c, and the second connector 22 is inserted into the second medium port d and has a variable axial position relative to the medium channel 100a, so that assembly tolerances in the axial direction of the medium channel 100a that are caused by manufacturing tolerances and installation tolerances of the third fastener 500 and the second fastener 400 can be absorbed.

As shown in FIG. 7, in some other embodiments, the first fastener 300 is connected to the connection structure 100, one port of the first connector 201 is inserted into the first medium port c and has a variable axial position relative to the medium channel 100a, and another port of the first connector 201 is connected to the third fastener 500. One port of the second connector 202 is inserted into the second medium port d and has a variable axial position relative to the medium channel 100a, and another port of the second connector 202 is connected to the second fastener 400. The first connector 201 is inserted into the first medium port c, and the second connector 22 is inserted into the second medium port d and has a variable axial position relative to the medium channel 100a, so that assembly tolerances in the axial direction of the medium channel 100a that are caused by manufacturing tolerances and installation tolerances of the third fastener 500, the second fastener 400, and the first fastener 300 can be absorbed.

In actual applications, the axial direction of the medium channel 100a may be a horizontal direction, a vertical direction, or a direction that is at an angle to the horizontal direction or the vertical direction, all of which can achieve the purpose of absorbing assembly tolerances in the axial direction of the medium channel 100a that are caused by manufacturing tolerances and installation tolerances.

In actual applications, the first connector 201 and the second connector 202 are fixedly or movably connected to the two medium ports of the medium channel 100a, respectively, and the first fastener 300, the second fastener 400, and the third fastener 500 are optionally arranged, so as to absorb different assembly tolerances of different fasteners in the axial direction of the medium channel 100a.

Finally, it should be noted that the above embodiments are merely intended for describing the technical solutions of the present application, but not for limiting the present application. Although the present application is described in detail with reference to the above embodiments, a person of ordinary skill in the art should understand that they may still make modifications to the technical solutions described in the above embodiments, or make equivalent replacements to some or all of the technical features therein. These modifications or replacements do not make the essence of the corresponding technical solutions deviate from the scope of the technical solutions of the embodiments of the present application, and shall fall within the scope of the claims and specification of the present application. In particular, the technical features mentioned in the embodiments may be combined in any manner, provided that there is no structural conflict. The present application is not limited to the specific embodiments disclosed herein, but includes all technical solutions falling within the scope of the claims.

## Claims

1. A connection structure, **characterized in that**:
the connection structure is provided with a medium channel;
at least part of the medium channel being configured for insertion of an external connector and allowing a variable axial position of the external connector relative to the medium channel.

2. The connection structure according to claim 1, wherein
the medium channel comprises at least an adaptive portion and an adjustable portion that are sequentially arranged in the axial direction thereof, the adaptive portion is configured to be adapted to the external connector and to allow a variable position of the external connector relative to the adaptive portion in the axial direction of the medium channel, and the adjustable portion is provided to receive a part that is of the external connector and that is beyond the adaptive portion.

3. The connection structure according to claim 2, wherein
the medium channel is provided with two medium ports arranged opposite to each other in the axial direction thereof, and the adaptive portion and the adjustable portion are arranged in the vicinity of at least one of the medium ports.

4. The connection structure according to claim 2 or 3, wherein
an inner limit portion is arranged in the medium channel, the inner limit portion protrudes from a channel wall of the medium channel toward the inner side of the medium channel, the inner limit portion is located on a movable path of the external connector, and the adaptive portion, the adjustable portion, and the inner limit portion are sequentially arranged in the axial direction of the medium channel.

5. The connection structure according to claim 4, wherein
the inner limit portion extends in the circumferential direction of the medium channel, and a plane in which the inner limit portion is located is perpendicular to the axis of the medium channel.

6. The connection structure according to any one of claims 2 to 5, wherein
the medium channel comprises at least a first channel segment and a second channel segment that communicate in the axial direction thereof, the radial dimension of the first channel segment is larger than that of the second channel segment, a step is formed at a connection position of the first channel segment and the second channel segment, the first channel segment is provided with the adaptive portion and the adjustable portion, and the adaptive portion and the step define the axial dimension of the adjustable portion.

7. The connection structure according to any one of claims 2 to 6, wherein
the connection structure comprises an outer limit portion configured with at least part of the adaptive portion, the outer limit portion is away from the adjustable portion in the axial direction of the medium channel, the outer limit portion is provided with a first abutting surface arranged facing away from the adjustable portion, and the first abutting surface is provided to abut against a second abutting surface of the external connector to define the axial distance by which the external connector is inserted into the medium channel.

8. The connection structure according to claim 7, wherein
the first abutting surface extends in the circumferential direction of the medium channel, and a plane in which the first abutting surface is located is perpendicular to the axis of the medium channel.

9. The connection structure according to any one of claims 2 to 8, wherein
the connection structure comprises a cylindrical wall portion, an inner cylindrical wall of the cylindrical wall portion forms at least part of the adaptive portion, the cylindrical wall portion is away from the adjustable portion in the axial direction of the medium channel, an end face that is of the cylindrical wall portion and that faces away from the adjustable portion is provided to abut against the second abutting surface of the external connector to define the axial distance by which the external connector is inserted into the medium channel, and the end face is the first abutting surface.

10. The connection structure according to any one of claims 2 to 9, wherein
the radial dimensions of the adjustable portion and the adaptive portion are consistent.

11. The connection structure according to any one of claims 2 to 10, wherein
a channel wall of the adaptive portion is provided with an adaptive area to be adapted to an annular seal, and the annular seal is provided to seal the connection structure and the external connector.

12. The connection structure according to any one of claims 1 to 11, wherein
the connection structure comprises a first connection structure and a second connection structure;
the first connection structure is provided with a part of the medium channel, the second connection structure is provided with another part of the medium channel, and the first connection structure and the second connection structure are detachably connected in the axial direction of the medium channel.

13. The connection structure according to claim 12, wherein
the axis of the medium channel is at an angle to the horizontal line, and the first connection structure is arranged on an upper side of the second connection structure; and
the channel wall of the another part of the medium channel of the second connection structure is provided with a first adaptive area to be adapted to a first annular seal, and the first annular seal is provided to seal the second connection structure and the external connector.

14. The connection structure according to claim 12 or 13, wherein
the first connection structure and the second connection structure are respectively provided with a first accommodating area and a second accommodating area on two opposite sides in the axial direction of the medium channel, the first accommodating area is provided to accommodate a part of a second annular seal, the second accommodating area is provided to accommodate another part of the second annular seal, and the second annular seal is provided to seal the first connection structure and the second connection structure.

15. The connection structure according to any one of claims 12 to 14, wherein
the axis of the medium channel is at an angle to the horizontal line, and the first connection structure is arranged on an upper side of the second connection structure; and
the channel wall of the part of the medium channel of the first connection structure is provided with a second adaptive area to be adapted to a third annular seal, and the third annular seal is provided to seal the first connection structure and the external connector.

16. The connection structure according to any one of claims 12 to 15, wherein
the first connection structure comprises a first base portion, a first cylindrical wall portion and a second cylindrical wall portion are respectively arranged on two opposite sides of the first base portion, and an inner cylindrical wall of the first cylindrical wall portion communicates with an inner cylindrical wall of the second cylindrical wall portion to form a part of the medium channel; and
the second connection structure comprises a second base portion, an annular countersink and a cylindrical wall portion are respectively arranged on two opposite sides of the second base portion, the second cylindrical wall portion is inserted into the annular countersink, an end face of the second cylindrical wall portion abuts against a surface of the annular countersink, and the first base portion and the second base portion converge in the axial direction of the medium channel.

17. The connection structure according to any one of claims 12 to 16, wherein
the first connection structure is a flange structure, and the second connection structure is a flange structure.

18. A heat exchange device, **characterized in that**:
the heat exchange device comprises an external connector, and the connection structure according to any one of claims 1 to 17, the external connector being inserted into at least part of the medium channel of the connection structure and having a variable axial position relative to the medium channel.

19. The heat exchange device according to claim 18, wherein
the heat exchange device further comprises a first fastener and a second fastener, the first fastener is connected to the connection structure, one port of the external connector is inserted into at least part of the medium channel and has a variable axial position relative to the medium channel, and another port of the external connector is connected to the second fastener.

20. The heat exchange device according to claim 18, wherein
the medium channel is provided with a first medium port and a second medium port that are arranged opposite to each other in the axial direction thereof, the external connector comprises a first connector and a second connector, and the heat exchange device further comprises a second fastener and a third fastener;
one port of the first connector is inserted into the first medium port, and another port of the first connector is connected to the third fastener, one port of the second connector is inserted into the second medium port and has a variable axial position relative to the medium channel, and another port of the second connector is connected to the second fastener.

21. The heat exchange device according to claim 20, wherein
one port of the first connector is inserted into the first medium port and has a variable axial position relative to the medium channel.
